# EUROPEAN PATENT APPLICATION

(11) **EP 3 893 070 A1**
(43) Date of publication of application: **13.10.2021**
(21) Application number: 20168662.3
(22) Date of filing: 08.04.2020
(51) Int. Cl.: G05B 23/02, F03D 17/00

(54) **METHOD AND SYSTEM FOR MONITORING OPERATION OF WIND TURBINES**

(71) Applicant: Siemens Gamesa Renewable Energy A/S, 7330 Brande (DK)
(72) Inventor: Gollnick, Bert, 22145 Hamburg (DE)
(74) Representative: Aspacher, Karl-Georg

(57) **Abstract**

There is described a method of monitoring operation of one or more wind turbines, the method comprising (a) collecting (110) a set of parameter values during a predetermined time window, the parameter values being based on at least one sensor signal, (b) determining (120) an actual probability density function based on the set of parameter values, (c) determining (130) a likelihood of equality between the actual probability density function and a reference probability density function, and/or (d) deriving (140) an actual characteristic value from the actual probability density function and comparing it with a reference characteristic value derived from the reference probability density function, and (e) triggering (150, 160) an alarm if the likelihood of equality exceeds an alarm likelihood threshold or if the actual characteristic value exceeds the reference characteristic value. Furthermore, a corresponding system, a wind turbine and a computer program are described.

## Description

### Field of Invention

The present invention relates to the field of wind turbine generator control, in particular to a method and a system for controlling operation of one or more wind turbines. The present invention further relates to a wind turbine and a computer program.

### Art Background

Known wind turbine controllers and monitoring systems rely on fixed thresholds for triggering warnings and alarms. More specifically, a warning is triggered when a monitored signal (such as a measured temperature, pressure, velocity, strain or other physical parameter value, or a fused and/or processed signal from several sensors) exceeds a pre-defined warning threshold. Similarly, an alarm is triggered when the monitored signal exceeds a pre-defined alarm threshold (which is usually higher than the warning threshold). As long as the monitored signal is below both thresholds, nothing is triggered.

This known approach relying on fixed thresholds has a number of drawbacks:
- The static thresholds are defined by domain experts. Thus, the thresholds are to some degree arbitrary.
- The thresholds are not defined in a data driven way, but rather hard coded from an existing specification.
- The conditions during testing of a component may differ from the conditions during actual operation.
- The thresholds do not reflect the complex physical reality.
- The quality of components may differ from zero-production or test to actual series production or behavior under production conditions.

A further drawback is that a single erroneous measurement value that exceeds the alarm threshold will trigger an alarm. This can lead to a turbine stop and hence cause a significant downtime and corresponding lost revenue. Furthermore, comparison of actual measurement values with the thresholds does not allow for detection of trends, such as a steadily increasing sensor signal value, which would make it possible to anticipate dangerous situations and to apply countermeasures in time to reduce the risk of triggering an alarm.

Hence, there may be a need for wind turbine monitoring methods and systems, which do not suffer from at least some of the above drawbacks.

### Summary of the Invention

This need may be met by the subject matter according to the independent claims. Advantageous embodiments of the present invention are described by the dependent claims.

According to a first aspect of the invention, there is provided a method of monitoring operation of one or more wind turbines, the method comprising (a) collecting a set of parameter values during a predetermined time window, the parameter values being based on at least one sensor signal, (b) determining an actual probability density function based on the set of parameter values, (c) determining a likelihood of equality between the actual probability density function and a reference probability density function, and/or (d) deriving an actual characteristic value from the actual probability density function and comparing it with a reference characteristic value derived from the reference probability density function, and (e) triggering an alarm if the likelihood of equality exceeds an alarm likelihood threshold or if the actual characteristic value exceeds the reference characteristic value.

This aspect of the invention is based on the idea that values of the parameter that is monitored are continuously collected during a predetermined time window (such as the last minute, last 10 minutes, last hour or a last day) and processed in order to determine an actual probability density function that represents the distribution of the parameter values, i.e. for each value the function indicates the frequency of occurrence. This actual probability density function is directly or indirectly compared with a reference probability density function, either by determining a likelihood of equality between the actual probability density function and the reference probability density function or by comparing an actual characteristic value derived from the actual probability density function with a reference characteristic value derived from the reference probability density function. If a certain degree of similarity is determined to be present, i.e. if the likelihood of equality exceeds an alarm likelihood threshold or if the actual characteristic value exceeds the reference characteristic value, then an alarm is triggered and operation of the wind turbine will immediately change accordingly, i.e. in most cases the wind turbine will be shut down.

The parameter values may be (digital or analog) values output directly from a sensor, such as a temperature sensor, a velocity sensor, a pressure sensor, a strain sensor, a velocity sensor, etc. Alternatively, the parameter value may be based on values output from a plurality of such sensors, in particular from a plurality of sensors of the same type and/or from a plurality of sensors of different types.

According to an embodiment of the invention, the reference probability density function corresponds to a behavior of the parameter during erroneous operation of the wind turbine.

In other words, the reference probability density function reflects the distribution of the parameter when the wind turbine is operating in an erroneous state, i.e. when one or more errors or defects are present.

According to a further embodiment of the invention, determining the likelihood of equality comprises applying a statistical analysis, in particular a Kolmogorov Smirnov test.

It should be noted that any statistical analysis capable of determining a likelihood of equality between two or more functions can be applied.

According to a further embodiment of the invention, the method further comprises triggering a warning if the likelihood of equality exceeds a warning likelihood threshold.

The warning likelihood threshold is typically lower than the alarm likelihood threshold. The warning will often not cause any immediate reaction or change in the wind turbine control but merely serves to draw the system's attention to the fact that a serious issue may be approaching.

According to a further embodiment of the invention, the actual characteristic value is a median value of the actual probability density function and/or the reference characteristic value is a median value of the reference probability density function.

The median value of the reference probability density function is the parameter value for which the reference probability density function indicates that 50% of all parameter values are larger. Similarly, the median value of the actual probability density function is the parameter value for which the actual probability density function indicates that 50% of all parameter values are larger.

According to a further embodiment of the invention, the method further comprises (a) comparing the actual characteristic value with a further reference characteristic value derived from the reference probability density function, and (b) triggering a warning if the actual characteristic value exceeds the further reference characteristic value, wherein the further reference characteristic value is smaller than the reference value.

In other words, the actual characteristic value is also compared to a further reference characteristic value which is smaller than the reference value. If this smaller further reference characteristic value is exceeded (but the reference characteristic value is not), the warning is triggered. As above, the warning will usually not cause any immediate reaction or change in the wind turbine control but merely serves to draw the system's attention to the fact that a serious issue may be approaching.

According to a further embodiment of the invention, the further reference value is a fractile, in particular a fractile selected from the group consisting of the 5% fractile, 10% fractile, 15% fractile, and 20% fractile.

According to a further embodiment of the invention, the method further comprises determining a trend indicator based on the actual probability density function and a plurality of previous probability density functions, wherein the previous probability density functions are respectively determined based on a plurality of previous sets of parameter values collected during previous time windows.

Here, the data from several time windows are utilized to determine a trend indicator for the parameter, i.e. an indicator as to how the parameter and parameter distribution are changing over time.

According to a further embodiment of the invention, the trend indicator is indicative of whether the actual probability density function is getting more or less similar to the reference probability density function.

A positive trend indicator may indicate that the actual probability density is getting more similar to the reference probability density function. On the other hand, a negative trend indicator may indicate that the actual probability density is getting less similar to the reference probability density function. The larger the numerical value of the trend indicator is, the faster the actual probability density is moving towards or away from the reference probability density function.

Hence, the trend indicator provides the wind turbine control system with valuable information, e.g. on how much time it has available to apply suitable countermeasures in order to prevent triggering of an alarm.

According to a further embodiment of the invention, the reference probability density function is initially determined based on measured and/or simulated values during production and/or testing of the wind turbine.

In other words, the wind turbine may be allowed (to the extent possible) to run under erroneous circumstances while the parameter values are being measured. The values may also be simulated based on suitable models, preferably using also some measured values.

According to a further embodiment of the invention, the reference probability density function is updated utilizing a machine learning system during operation of the wind turbine.

More specifically, the machine learning system may learn over time whether conditions corresponding to certain parameter values actually lead to shutdown or failure of the wind turbine or whether they are in fact acceptable. This collected knowledge may be used to adjust, update and fine-tune the reference probability density function over time and thereby improve the monitoring of wind turbine operation by triggering even more reliable alarms and warnings.

According to a second aspect of the invention, there is provided a system for monitoring operation of one or more wind turbines, the system comprising (a) an interface configured to collect a set of parameter values during a predetermined time window, the parameter values being based on at least one sensor signal, and (b) a processing unit configured to: (c) determine an actual probability density function based on the set of parameter values, (d) determine a likelihood of equality between the actual probability density function and a reference probability density function, and/or (e) derive an actual characteristic value from the actual probability density function and compare it with a reference characteristic value derived from the reference probability density function, and (f) trigger an alarm if the likelihood of equality exceeds an alarm likelihood threshold or if the actual characteristic value exceeds the reference characteristic value.

This aspect of the invention is essentially based on the same idea as the first aspect. More specifically, the second aspect implements the method of the first aspect in a monitoring system for a wind turbine.

According to a third aspect of the invention, there is provided a wind turbine comprising the system according to the second aspect.

In other words, the third aspect provides a wind turbine with the advantageous monitoring system of the second aspect.

According to a fourth aspect of the invention, there is provided a computer program comprising computer executable instructions, which, when executed by a processor of a computer, causes the computer to perform the method according to the first aspect or any of the above embodiments.

It is noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular to combinations of features of the method type claims and features of the apparatus type claims, is part of the disclosure of this document.

The aspects defined above and further aspects of the present invention are apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.

### Brief Description of the Drawing

Figure 1 shows a flowchart of a method according to an embodiment of the present invention.
Figure 2 shows a plot of an actual probability density function and a reference probability density function in accordance with an embodiment of the present invention.
Figure 3 shows a plot of a parameter value as a function of time in accordance with an embodiment of the present invention.
Figure 4 shows a plot of actual probability density functions corresponding to different time windows and a reference probability density function in accordance with an embodiment of the present invention.

### Detailed Description

The illustration in the drawing is schematic. It is noted that in different figures, similar or identical elements are provided with the same reference numerals or with reference numerals which differ only within the first digit.

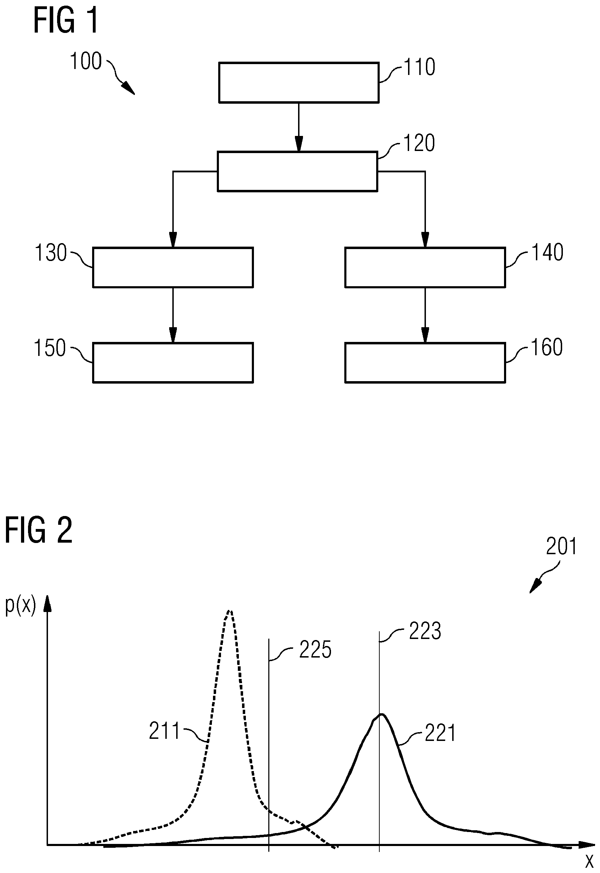

Figure 1 shows a flowchart 100 of a method of monitoring operation of one or more wind turbines according to an embodiment of the present invention.

The method 100 begins at 110 by collecting a set of parameter values during a predetermined time window. The parameter values are based on at least one sensor signal, e.g. a signal from a temperature sensor, a pressure sensor or another sensor. The parameter values may also be based on several sensor signals (sensor fusion).

Then, at 120, an actual probability density function is determined based on the set of parameter values. That is, the parameters of the distribution of different parameter values within the predetermined time window is calculated, e.g. by utilizing a frequentistic approach or a probabilistic approach (such as Markov Chain Monte Carlo).

Thereafter, the method 100 continues along a first branch, a second branch or along both branches in parallel.

In the first branch, at 130, a likelihood of equality between the actual probability density function and a reference probability density function is determined. The reference probability density function corresponds to the behavior of the parameter during erroneous operation of the wind turbine.

That is, the determined likelihood is a measure for the similarity between the actual and the reference probability density functions is obtained and hence an indicator for the likelihood that the wind turbine is experiencing a problem. If the likelihood of equality exceeds an alarm likelihood threshold, an alarm is triggered at 150.

In the second branch, at 140, an actual characteristic value is derived from the actual probability density function and compared with a reference characteristic value derived from the reference probability density function. Like above, the comparison serves to provide an indication for the likelihood that the wind turbine is experiencing a problem. In this case, this is done by comparing an actual characteristic value, such as a median value, a maximum value or a mean value of the parameter values within the collected set, with the reference characteristic value derived from the reference probability density function. The latter may in particular be a median value or another fractile. If the actual characteristic value exceeds the reference characteristic value, an alarm is triggered at 160.

The alarms are used by the wind turbine control system as an indication of a serious problem and handled accordingly, e.g. by shutting down the wind turbine.

Further likelihood thresholds, such as a warning likelihood threshold, may also be used in steps 130 and 150 to issue a warning. Similarly, further reference characteristic values, such as a 5% fractile, may also be used in steps 140 and 160 to issue a warning.

It should be understood that the method 100 is performed repetitively, e.g. by using a sliding time window to collect the parameter values of the last x seconds, minutes, hours or days.

The method is preferably implemented directly in the wind turbine controller or in a wind park controller, preferably as a software module.

Figure 2 shows a plot 201 of an actual probability density function 211 and a reference probability density function 221 in accordance with an embodiment of the present invention. More specifically, the abscissa shows values of parameter x and the ordinate shows corresponding values of the respective probability density function p(x). In the example shown, the reference probability density function 221 is positioned significantly more to the right than the actual probability density function 211. Hence, the similarity between the two functions 211 and 221 is very low and neither a warning nor an alarm will be triggered. This positional relationship may be true for many parameters in a wind turbine during normal operation, such as temperature, pressure, velocity, and strain. However, for some parameters, the positional relationship during normal operation may also be reversed, i.e. with the reference probability density function 221 positioned on the left-hand side of the normal actual probability density function.

The plot 201 also shows a median value 223 and a 5% fractile value 225 for the reference probability density function 221. These may be used as threshold in the method 100 as discussed above.

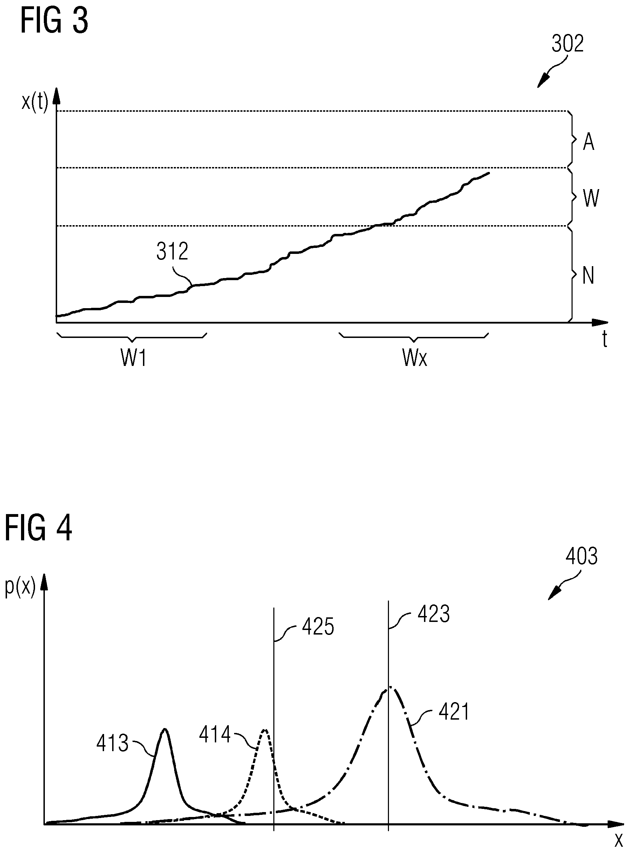

Figure 3 shows a plot 302 of a parameter value x as a function 312 of time t in accordance with an embodiment of the present invention. In this example, the parameter value x is, as shown by curve 312, steadily increasing with time. The plot 302 also shows three zones in the vertical direction, i.e. a normal zone N, a warning zone W and an alarm or critical zone A. Further shown are two exemplary time windows W1, Wx. As mentioned above, the parameter values are preferably collected during a sliding time window. Hence, there will be a large number of further time windows between W1 and Wx that are not shown in Figure 3. By analyzing the collected parameter values and the corresponding actual probability density functions, the increasing trend of the curve 312 can be detected early. Furthermore, reliable estimates as to when the curve 312 enters the warning zone W and the alarm zone A can be calculated and used to determine which countermeasures the control system should apply in an attempt to avoid that an alarm is triggered.

Figure 4 shows a plot 403 of actual probability density functions 413, 414 corresponding to different time windows and a reference probability density function 421 in accordance with an embodiment of the present invention. More specifically, the first actual probability density function 413 may correspond to time window W1 shown in Figure 3. Similarly, the second actual probability density function 414 may correspond to time window Wx shown in Figure 3 or to a time window between W1 and Wx in Figure 3. Like Figure 2, Figure 4 also shows a median value 423 and a 5% fractile value 425 for the reference probability distribution system 421. The values 423, 425 may be used as alarm or warning threshold values in the method 100 discussed above.

The reference probability distribution functions 221, 421 discussed above are initially obtained by simulation and/or measurement during design, production and testing of the wind turbines. Furthermore, the reference probability distribution functions 221, 421 may be continuously updated or improved during operation of the wind turbine, in particular by applying machine learning techniques.

It is noted that the term "comprising" does not exclude other elements or steps and the use of the articles "a" or "an" does not exclude a plurality. Also elements described in association with different embodiments may be combined. It is further noted that reference signs in the claims are not to be construed as limiting the scope of the claims.

## Claims

1. A method of monitoring operation of one or more wind turbines, the method comprising
collecting (110) a set of parameter values during a predetermined time window, the parameter values being based on at least one sensor signal,
determining (120) an actual probability density function based on the set of parameter values,
determining (130) a likelihood of equality between the actual probability density function and a reference probability density function, and/or
deriving (140) an actual characteristic value from the actual probability density function and comparing it with a reference characteristic value derived from the reference probability density function, and
triggering (150, 160) an alarm if the likelihood of equality exceeds an alarm likelihood threshold or if the actual characteristic value exceeds the reference characteristic value.

2. The method according to the preceding claim, wherein the reference probability density function corresponds to a behavior of the parameter during erroneous operation of the wind turbine.

3. The method according to any one of the preceding claims, wherein determining the likelihood of equality comprises applying a statistical analysis, in particular a Kolmogorov Smirnov test.

4. The method according to any one of the preceding claims, further comprising triggering a warning if the likelihood of equality exceeds a warning likelihood threshold.

5. The method according to any one of the preceding claims, wherein the actual characteristic value is a median value of the actual probability density function and/or wherein the reference characteristic value is a median value of the reference probability density function.

6. The method according to the preceding claim, further comprising
comparing the actual characteristic value with a further reference characteristic value derived from the reference probability density function, and
triggering a warning if the actual characteristic value exceeds the further reference characteristic value, wherein the further reference characteristic value is smaller than the reference value.

7. The method according to the preceding claim, wherein the further reference value is a fractile, in particular a fractile selected from the group consisting of the 5% fractile, 10% fractile, 15% fractile, and 20% fractile.

8. The method according to any one of the preceding claims, further comprising determining a trend indicator based on the actual probability density function and a plurality of previous probability density functions, wherein the previous probability density functions are respectively determined based on a plurality of previous sets of parameter values collected during previous time windows.

9. The method according to the preceding claim, wherein the trend indicator is indicative of whether the actual probability density function is getting more or less similar to the reference probability density function.

10. The method according to any one of the preceding claims, wherein the reference probability density function is initially determined based on measured and/or simulated values during production and/or testing of the wind turbine.

11. The method according to the preceding claim, wherein the reference probability density function is updated utilizing a machine learning system during operation of the wind turbine.

12. A system for monitoring operation of one or more wind turbines, the system comprising
an interface configured to collect a set of parameter values during a predetermined time window, the parameter values being based on at least one sensor signal, and
a processing unit configured to:
determine an actual probability density function based on the set of parameter values,
determine a likelihood of equality between the actual probability density function and a reference probability density function, and/or
derive an actual characteristic value from the actual probability density function and compare it with a reference characteristic value derived from the reference probability density function, and
trigger an alarm if the likelihood of equality exceeds an alarm likelihood threshold or if the actual characteristic value exceeds the reference characteristic value.

13. A wind turbine comprising the system according to the preceding claim.

14. A computer program comprising computer executable instructions, which, when executed by a processor of a computer, causes the computer to perform the method according to any one of claims 1 to 11.
